# EUROPEAN PATENT APPLICATION

(11) **EP 1 308 637 A1**
(43) Date of publication of application: **07.05.2003**
(21) Application number: 02023880.4
(22) Date of filing: 24.10.2002
(51) Int. Cl.: F16B 2/22, B23Q 3/02, F16B 19/02, B23B 31/117

(54) **Molded backplate nut bar location and retention pins**

(30) Priority: 31.10.2001 US 16741
(71) Applicant: EATON CORPORATION, Cleveland, Ohio 44114-2584 (US)
(72) Inventor: Ostrowski, Frank K., Natrona Heights, Pennsylvania 15065 (US); Sanner, Kenneth W., Midland, Pennsylvania 15059 (US)
(74) Representative: Wagner, Karl H., Dipl.-Ing.

(57) **Abstract**

An apparatus and method for locating and retaining a nut plate (38) utilizing at least one peg (68) having tapered, crushable ribs (72), dimensioned and configured to frictionally engage a corresponding aperture (70) in the nut plate, thereby locating and retaining the nut plate until a bolt is threadedly secured to the nut plate.

## Description

### BACKGROUND OF THE INVENTION

### 1. Field of the Invention

The present invention relates to locating and retaining a nut bar in the proper position during assembly of a structure utilizing the nut bar for mating with a bolt to secure two components together. More specifically, the invention relates to location and retention pins dimensioned and configured to provide for a crush fit between the pins and the nut bar.

### 2. Description of the Related Art

Nut bars or plates are commonly used as an alternative to hexagonal nuts when it is necessary to secure two components together using a bolt. A typical nut plate will have a plurality of threaded apertures, dimensioned and configured to receive the appropriate bolts. When the nut plate is located on the inside of an enclosure, or other awkward location, it may be difficult or impossible to attempt to hold the nut plate in place while screwing in the appropriate bolt.

Accordingly, an improved method of locating and retaining a nut plate prior to and during insertion of the appropriate bolt is desired.

### SUMMARY OF THE INVENTION

The present invention is an apparatus and method for locating and retaining a nut plate to assist in securing a bolt to the nut plate. The invention utilizes one or more pegs, dimensioned and configured to engage corresponding holes in the nut plate. The pegs include one or more ribs, with the ribs being tapered as they extend towards the ends of the pegs. The ribs are adapted to be crushed when the nut plate is placed over the pegs, thereby establishing a friction fit between the pegs and the nut plate. The nut plate is thereby located by the pegs, and retained by the friction fit between the nut plate and the pegs.

To use the invention, at least one peg having the appropriate tapered, crushable ribs is provided in the location where the nut plate will be located, and wherein it can mate with a corresponding hole in the nut plate. The location wherein the nut plate will be located may optionally be recessed to further locate and retain the nut plate. Additionally, eccentric peg and hole combinations may be utilized to limit the number of possible orientations of the nut plate when the nut plate is placed over the pegs. The nut plate is placed over the pegs, crushing the ribs and holding the nut plate in place. The two components to be bolted together, one of which now includes the nut plate, are then placed in the proper position, and one or more bolts are passed through apertures in the two components, where they are threadedly secured to the nut plate, thereby holding the two components together.

Although not limited to such use, the present invention is particularly useful for securing the electrically conductive stabs to the rear wall of a circuit breaker cabinet.

Accordingly, it is therefore an aspect of the present invention to provide one or more pegs having tapered, crushable ribs for locating and retaining a nut plate prior to threadedly securing a bolt to the nut plate.

It is another aspect of the present invention to provide a simplified method of fabricating assemblies.

These and other aspects of the invention will become apparent through the following description and drawings.

### BRIEF DESCRIPTION OF THE DRAWINGS

Figure 1 is a top isometric view of circuit breaker and circuit breaker cabinet for which the present invention will be used, with the cabinet's top and one side removed.
Figure 2 is a partially exploded, top isometric view of a circuit breaker cabinet, including the associated nut plates, stabs, and bus bars.
Figure 3 is a partially exploded, rear isometric view of the rear wall of a circuit breaker cabinet, including the associated nut plates, stabs, and bus bars.
Figure 4 is a partially exploded, front isometric view of the interior portion of the rear wall of a circuit breaker cabinet, including the stabs, and the pegs of the present invention, in conjunction with the nut plate with which they will be utilized.

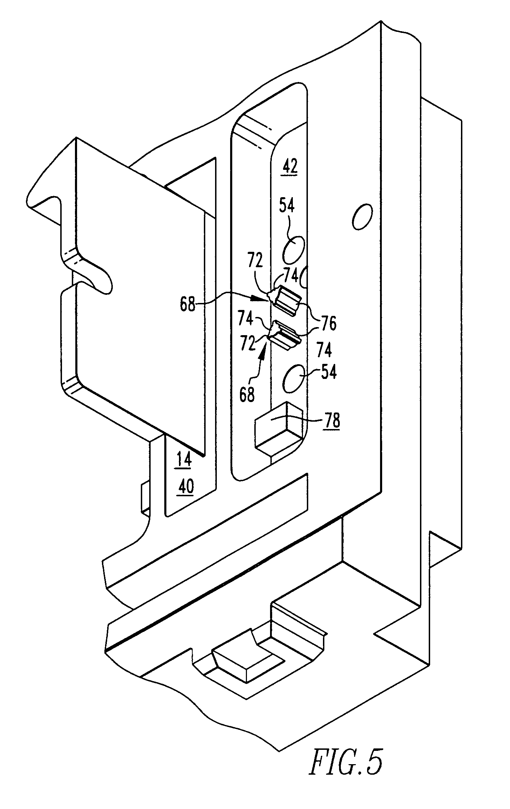

Figure 5 is an isometric view of the apparatus for locating and retaining a nut plate according to the present invention.

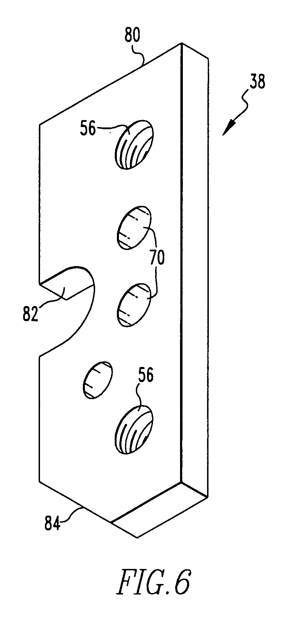

Figure 6 is a nut plate dimensioned and configured to be utilized in conjunction with the apparatus of Figure 5.

Like reference numbers denote like elements throughout the drawings.

### DETAILED DESCRIPTION

The present invention is an apparatus and method for locating and retaining a nut bar or plate within one of two components to be bolted together, prior to insertion of the bolt through the mating parts and threading the bolt into the nut plate. Although not limited to such use, the present invention is particularly useful for securing the stabs to the rear wall of a circuit breaker cabinet.

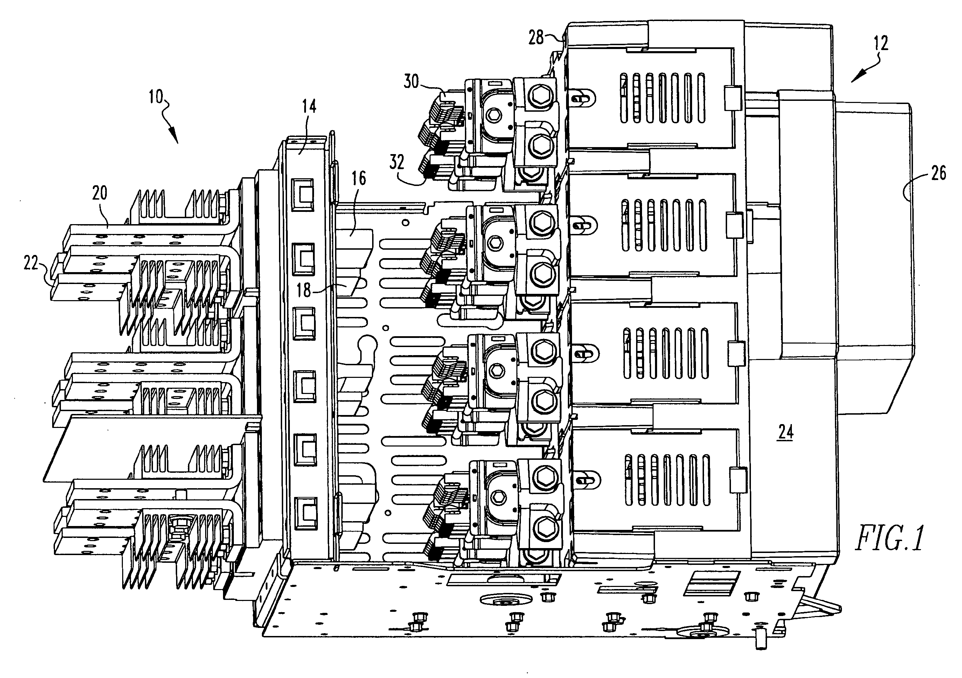

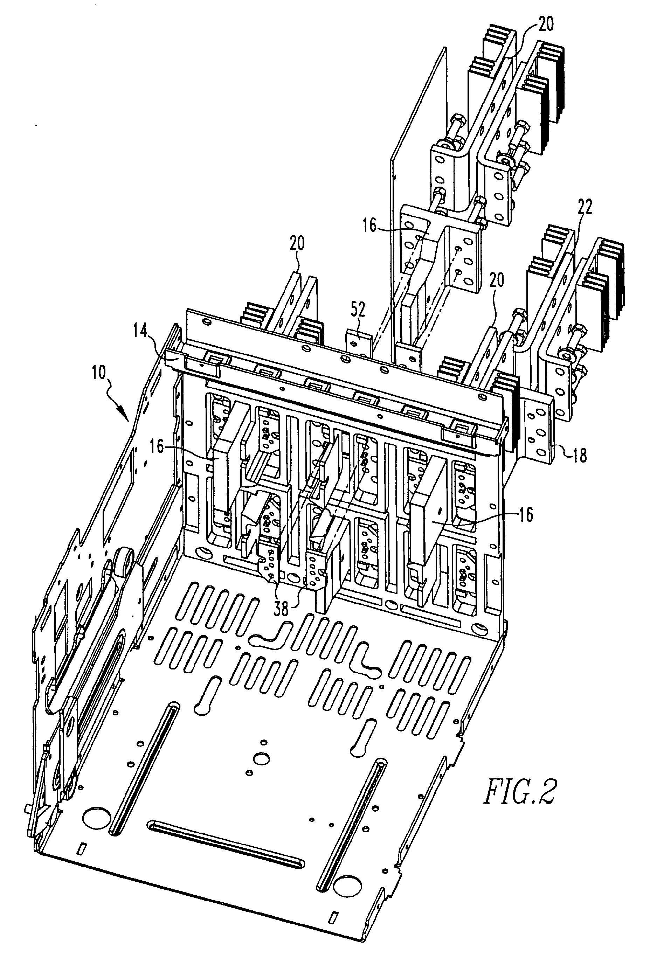

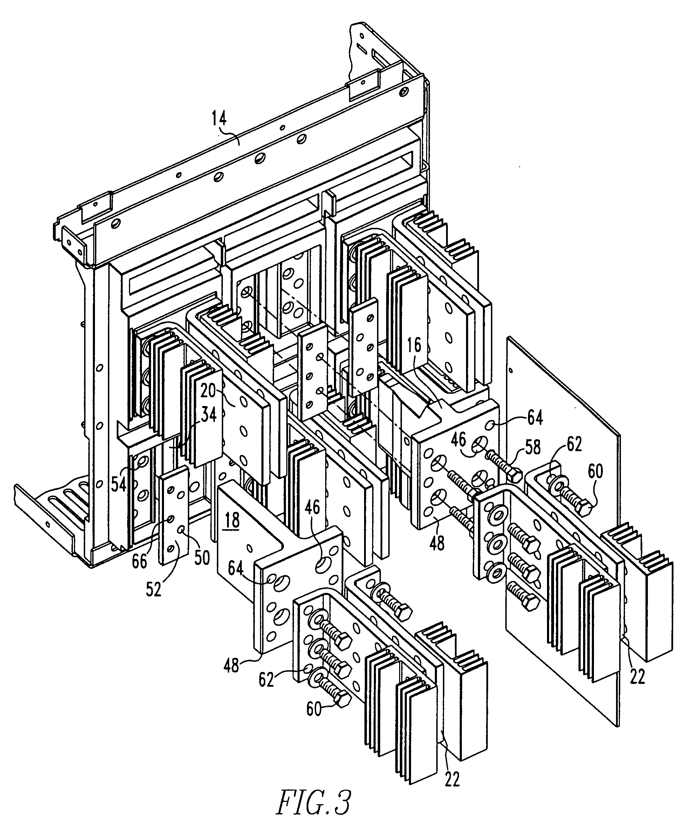

A typical circuit breaker cabinet 10 and associated circuit breaker 12 with which the present invention may be used are illustrated in Figure 1. The circuit breaker cabinet 10 includes a rear wall 14 having at least one supply stab 16 and load stab 18. Typically, there will be either three or four pairs of stabs, with each pair of stabs comprising one supply stab 16 and one load stab 18. Each supply stab 16 will be electrically connected with a supply bus 20, and each load stab 18 will be electrically connected with a load bus 22.

The circuit breaker 12 includes a housing 24 containing the breaker mechanism (not shown, and well known in the art of circuit breakers), and having a control panel 26 on the front of the housing 24, including the breaker switches (not shown, and well known). The rear portion 28 of the circuit breaker 12 includes a supply quick disconnect 30 corresponding to each supply stab 16, and a load quick disconnect 32 corresponding with each load stab 18. An additional supply quick disconnect 30 and load quick disconnect 32 may be provided for the neutral buses in a typical three-phase system.

In use, the circuit breaker 12 will be moved to the rearmost portion of the cabinet 10, wherein the quick disconnects 30, 32 will engage the stabs 16, 18. Electrical power will therefore flow from the supply buses 20 through the supply stab 16, through the supply quick disconnect 30, through the circuit breaker 12, through the load quick disconnect 32, load stab 18, and load bus 22, and ultimately to the downstream load. As is well known, the circuit breaker 12 will trip, thereby cutting off current, when excessive current is present. When servicing the circuit breaker 12 is desired, the circuit breaker 12 is first shut off, and then moved forward within the cabinet 10, thereby disconnecting the quick disconnects 30, 32 from the stabs 16, 18, enabling the circuit breaker 12 to be serviced without any danger posed by electrical current flowing through the circuit breaker 12.

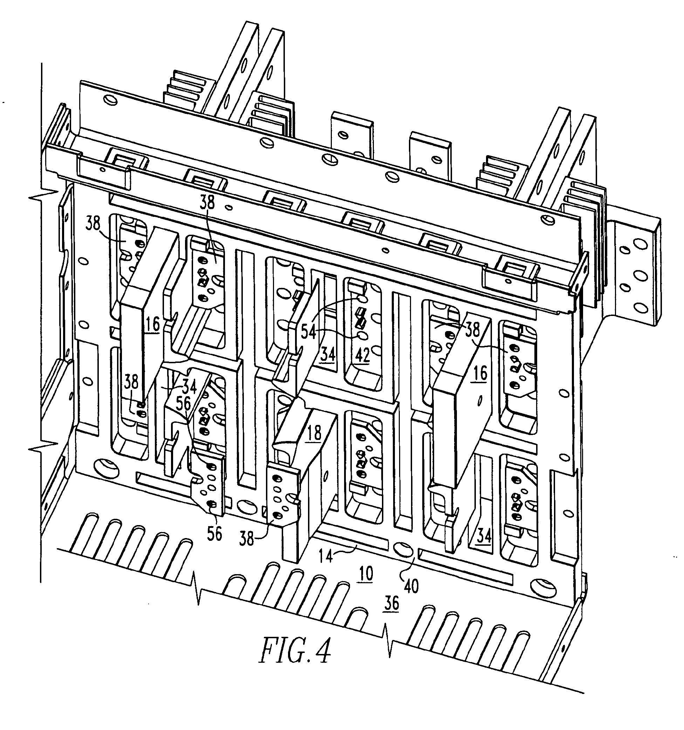

Referring to Figures 2-4, the components of the circuit breaker cabinet 10 are illustrated. The stabs 16, 18 are inserted through slots 34 defined within the rear wall 14 of the circuit breaker cabinet 10, so that they protrude into the interior 36 of the cabinet 10. Nut bar or plate 38 is positioned against the interior surface 40 of the rear wall 14. The interior surface 40 of the rear wall 14 may include a plurality of recessed portions 42, dimensioned and configured to receive the nut plate 38. Bolts 58 are then passed through the apertures 46 within the rear flange 48 of the stabs 16, 18, through the apertures 50 within the nut plate 52 (located between the rear flange 48 and rear wall 14), and through the apertures 54 within the rear wall 14, where they are finally threaded to the apertures 56 within the nut bar 38. Both the stabs 16, 18, and the nut plate 52 are thereby secured to the rear wall 14 through the interaction of the nut bar 38 and bolts 58.

The buses 20, 22 are then electrically connected to the stabs 16, 18 by inserting the bolts 60 through the apertures 62 in the buses 20, 22, through the apertures 64 within the rear flange 48 of the stabs 16, 18, and threading them into the threaded apertures 66 of the nut plate 52. The buses 20, 22 are thereby electrically connected and mechanically secured to the stabs 16, 18.

From the above description, it becomes apparent that there is a need for an apparatus and method for locating the nut plates 38 within the appropriate location prior to and during insertion and threaded engagement of the bolts 58 with the nut plates 38. The present invention is such an apparatus and method. The present invention includes at least one, and preferably two, pegs 68 located on the interior surface 40 of the rear wall 14. The pegs 68 are dimensioned and configured to form a friction fit with the apertures 70 within the nut plate 38, thereby locating and securing the nut plate 38 in the proper location. A preferred means of providing this friction fit is to include at least one rib 72 on the pegs 68. The ribs 72 are more preferably at least three in number, and may be tapered so that they are narrowest towards the tip 74 of the pegs 68, and widest towards the base 76 of the pegs 68. The ribs 72 are adapted to be crushed upon insertion of the pegs 68 in the apertures 70. A preferred means of making the ribs 72 crushable is to fabricate them from a crushable plastic, which is more preferably a thermoset, glass-filled resin.

To ensure proper orientation of the nut plate 38, the apertures 70 may be eccentrically located along the length of the nut plate 38. This eccentric location of the apertures 70, combined with dimensioning and configuring the recess 42 to permit insertion of the nut plate 38 in only one orientation, ensures that the nut plate 38 is always inserted into the recess 42, and over the pegs 68, in the proper orientation. One means of dimensioning and configuring the recess 42 to permit insertion of the nut plate 38 in only one direction is to provide the stop 78, dimensioned and configured to abut the surface 80 of the nut plate 38. The nut plate 38 may also include cut-away sections 82, 84 for providing clearance for the bolts 60.

When the pegs 68 are present, the method of attaching the stabs 16, 18 to the rear wall 14 includes the steps of placing the nut plate 38 within the recess 42, thereby causing the pegs 68 to frictionally engage the apertures 70 to secure the nut plate 38 in the proper location, inserting the stabs 16, 18 through the slots 34 within the rear wall 14, and then inserting the bolts 58 through the apertures 46, the apertures 50, and the apertures 54, wherein they may threadedly engage the apertures 56 within the nut plate 38.

While a specific embodiment of the invention has been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the appended claims and any and all equivalents thereof.

## Claims

1. An apparatus for locating and retaining a nut plate, the nut plate having at least one aperture, said apparatus comprising at least one peg, said at least one peg having at least one tapered, crushable rib, said at least one peg being dimensioned and configured to frictionally engage said at least one aperture.

2. The apparatus according to claim 1, wherein said at least one rib comprises three ribs.

3. The apparatus according to claim 1, wherein said at least one peg comprises two pegs.

4. The apparatus according to claim 3, wherein said two pegs are dimensioned and configured to limit a number of possible orientations of the nut plate when the nut plate engages said pegs.

5. An apparatus for locating and retaining a nut plate, the nut plate having at least one aperture, said apparatus comprising at least one peg, said at least one peg having means for frictionally engaging said at least one aperture.

6. The apparatus of claim 5, wherein said means for frictionally engaging said at least one aperture include at least one tapered, crushable rib.

7. A method for locating and retaining a nut plate, the nut plate having at least one aperture, said method comprising:
providing comprising at least one peg, said at least one peg having at least one tapered, crushable rib, said at least one peg being dimensioned and configured to frictionally engage said at least one aperture; and
placing the nut plate over said at least one peg, forming a friction fit between said at least one peg and said nut plate.
